# EUROPEAN PATENT APPLICATION

(11) **EP 4 790 326 A1**
(43) Date of publication of application: **12.08.2026**
(21) Application number: 24928709.5
(22) Date of filing: 18.12.2024
(51) Int. Cl.: F24F 8/108, F24F 8/50, F24F 13/28, F24F 13/20, B01D 46/00

(54) **FILTER ASSEMBLY AND AIR PURIFIER COMPRISING SAME**

(30) Priority: 05.03.2024 KR 20240031624; 05.03.2024 KR 20240031627; 29.05.2024 KR 20240070387
(71) Applicant: Samsung Electronics Co., Ltd., Suwon-si, Gyeonggi-do 16677 (KR)
(72) Inventor: PARK, Geunyoung, Suwon-si Gyeonggi-do 16677 (KR); JEONG, Sekwan, Suwon-si Gyeonggi-do 16677 (KR); WOO, Dongwoo, Suwon-si Gyeonggi-do 16677 (KR); YUN, Soyoung, Suwon-si Gyeonggi-do 16677 (KR)
(74) Representative: Gulde & Partner
(86) International application number: PCT/KR2024/020603
(87) International publication number: WO 2025/187911

(57) **Abstract**

A filter assembly is disclosed. The filter assembly includes a filter unit including a filter, a first case coupled to a lower end of the filter unit, and a second case coupled to the lower end of the filter unit. The filter unit includes a first molding provided at the lower end of the filter unit and in contact with the first case, and a second molding provided at an upper end of the filter unit and in contact with the second case. Each of the first case and the second case comprises a non-polar polymer material.

## Description

### [Technical Field]

The present disclosure relates to a filter assembly and an air cleaner including the same.

### [Background Art]

An air cleaner is a device that intakes, purifies, and discharges contaminated air. The air cleaner takes in air containing contaminants through a front inlet using a blower, passes the intake air through a filter assembly to remove the contaminants, and discharges the purified air through an upper or side outlet. The filter assembly is replaced at regular or random cycles depending on a location where the air cleaner is used. The used filter assembly is discarded together with a filter and a plastic case supporting the filter. Recently, with the emergency of environment, safety, and health (EHS), research is being conducted on the filter assembly that may separate and discharge the filter of the used filter assembly from a case and recycle the case.

### [Disclosure]

### [Technical Solution]

Embodiments of the disclosure provide a filter assembly capable of separating and discharging a filter from a case and improving air leakage occurring between the case and the filter, and an air cleaner including the same.

According to an example embodiment of the present disclosure, a filter assembly includes: a filter unit including a filter; a first case coupled to a lower end of the filter unit; and a second case coupled to an upper end of the filter unit. The filter unit may include: a first molding provided at the lower end of the filter unit and in contact with the first case; and a second molding provided at an upper end of the filter unit and in contact with the second case. Each of the first case and the second case may comprise a non-polar polymer material.

Each of the first molding and the second molding may comprise a urethane resin.

The urethane resin may include a curable two-component urethane adhesive.

The non-polar polymer material may comprise a material having a surface energy of 33 dynes/cm or less.

A surface of the first case, in contact with the first molding, may be formed by lapping processing. A surface of the second case, in contact with the second molding, may be formed by the lapping processing.

Each of the first case and the second case may comprise polypropylene or polyethylene.

Each of the first case and the second case may include a strength-reinforcing material included in polypropylene and/or polyethylene. The strength-reinforcing material may include at least one of talc, glass fiber, and carbon black.

The filter assembly may further include: a fastening structure comprising a fastener configured to detachably fasten the lower end of the filter unit and the first case and detachably fasten the upper end of the filter unit and the second case.

The filter unit may include: a first filter having a cylindrical shape and having the first molding coupled along the lower end and the second molding coupled along the upper end; and a second filter provided on an inner side of the first filter. The fastening structure may include: a plurality of first hooks provided along a lower end of the second filter; a plurality of second hooks provided along an upper end of the second filter; a plurality of first catches provided in the first case and having fastening holes to which the plurality of first hooks are configured to be fastened; and a plurality of second catches provided in the second case and having fastening holes to which the plurality of second hooks are fastened.

Each of the first case and the second case may have a rectangular loop shape. At least one first catch among the plurality of first catches may be disposed to be biased at a certain angle from a virtual first straight line crossing two opposing corners of the first case. At least one second catch among the plurality of second catches may be disposed to be biased at a certain angle from a virtual second straight line crossing two opposing corners of the second case.

The first catch biased from the virtual first straight line and the second catch biased from the virtual second straight line may each be fastened to the second filter to face each other.

A spacing between the plurality of first catches disposed on a first side surface of the first case and a spacing between the plurality of first catches disposed on a second side surface adjacent to the first side surface of the first case may be different. A spacing between the plurality of second catches disposed on a first side surface of the first case and a spacing between the plurality of first second catches disposed on a second side surface adjacent to the first side surface of the first case may be different.

The first case may further include a plurality of first handles provided at each corner of the first case. The second case may further include a plurality of second handles provided at each corner of the second case.

The second filter may include a plurality of post-filters continuously disposed along an inner side surface of the first filter.

The first case may include: a first coupling groove having a loop shape and into which the first molding is configured to be inserted; and a second coupling groove formed along one side of the first coupling groove and into which the lower end of the second filter is configured to be inserted. The second case may include: a third coupling groove having a loop shape and into which the second molding is configured to be inserted; and a fourth coupling groove formed along one side of the third coupling groove and into which the upper end of the second filter is configured to be inserted.

The first filter may be configured as a dust collection filter. The second filter may be configured as a deodorizing filter.

The filter unit may further include a third filter surrounding the first filter.

The third filter may include a microfiber filter having a mesh shape.

According to an example embodiment of the present disclosure, an air cleaner includes: a main body including a receiving space and a discharge space separated from the receiving space; a blower fan disposed between the receiving space and the discharge space, configured to take in external air into the receiving space and discharge the external air to an outside of the main body through the discharge space; and a filter assembly comprising a filter retractably inserted into the receiving space of the main body and configured to purify the external air introduced into the receiving space. The filter assembly may include: a filter unit including a first molding comprising urethane resin provided along a lower end and a second molding comprising urethane resin provided along an upper end, and having a cylindrical shape; a first case configured to support the lower end of the filter unit while being in contact with the first molding; a second case configured to support the upper end of the filter unit while being in contact with the second molding; a fastening structure including a fastener configured to detachably fasten the lower end of the filter unit and the first case and detachably fasten the upper end of the filter unit and the second case. Each of the first case and the second case may comprise a non-polar polymer material.

### [Description of Drawings]

The above and other aspects, features and advantages of certain embodiments of the present disclosure will be more apparent from the following detailed description, taken in conjunction with the accompanying drawings, in which:
FIG. 1 is an exploded perspective view illustrating an example in which a filter assembly is mounted on an air cleaner according to various embodiments;
FIG. 2 is a diagram illustrating a front view of an air cleaner according to various embodiments;
FIG. 3 is a perspective view illustrating an air cleaner that takes in contaminated air and discharges purified air according to various embodiments;
FIG. 4 is an exploded perspective view illustrating the filter assembly according to various embodiments;
FIG. 5 is a perspective view illustrating the filter assembly according to various embodiments;
FIG. 6 is a a partial exploded perspective view illustrating an example in which a post-filter is combined with a dust collection filter of the filter assembly according to various embodiments;
FIG. 7 is an exploded perspective view illustrating an example of applying a two-component urethane adhesive to a first case of the filter assembly according to various embodiments;
FIG. 8 is a perspective view illustrating an example of temporarily bonding the dust collection filter to the first case of a filter assembly according to various embodiments;
FIG. 9 is a diagram illustrating an enlarged view of a part of the dust collection filter according to various embodiments;
FIG. 10 is a diagram illustrating a plan view of the first case of the filter assembly according to various embodiments;
FIG. 11 is a cross-sectional view taken along line A-A' of FIG. 10 according to various embodiments;
FIG. 12 is a perspective view illustrating the first case of the filter assembly according to various embodiments;
FIG. 13 is a diagram illustrating a side view of an example in which a plurality of post-filters are combined with the first case and the second case of the filter assembly according to various embodiments;
FIG. 14 is a partial enlarged perspective view of a structure in which a fourth post-filter and the first case of the filter assembly are mutually fastened according to various embodiments; and
FIG. 15 is a an exploded perspective view illustrating the first case separated from a filter unit of the filter assembly according to various embodiments.

### [Mode for Invention]

Hereinafter, various example embodiments will be described in greater detail with reference to the accompanying drawings. The various example embodiments described in the disclosure may be variously modified. A specific embodiment may be illustrated in the drawings and be described in detail in a detailed description. However, the specific embodiment illustrated in the accompanying drawings is provided only to allow various embodiments to be easily understood. Therefore, it should be understood that the spirit of the present disclosure is not limited by the specific example embodiment illustrated in the accompanying drawings, but includes all the modifications, equivalents, and substitutions included in the spirit and the scope of the present disclosure. Furthermore, those skilled in the art will recognize that various changes and modifications can be made to various embodiments described herein without departing from the scope and spirit of the present disclosure.

In the present disclosure, terms including ordinal numbers such as "first," "second," and the like, may be used to describe various components. However, these components are not limited by these terms. These terms are used only to distinguish one component from another component. It should be further understood that terms "include" or "have" used in the disclosure specify the presence of features, numerals, steps, operations, components, parts mentioned in the disclosure, or combinations thereof, but do not preclude the presence or addition of one or more other features, numerals, steps, operations, components, parts, or combinations thereof. It is to be understood that when one component is referred to as being "connected to" or "coupled to" another component, one component may be connected directly to or coupled directly to another component or be connected to or coupled to another component with the other component interposed therebetween. On the other hand, it is to be understood that when one component is referred to as being "connected directly to" or "coupled directly to" another component, it may be connected to or coupled to another component without the other component interposed therebetween. In the present disclosure, the expression "same" may refer not only completely matching, but may also including a degree of difference considering a processing error range. When it is determined that a detailed description for known functions or configurations related to the disclosure may unnecessarily obscure the gist of the disclosure, the detailed description therefor may be abbreviated or omitted.

Hereinafter, various example embodiments of the disclosure will be described in greater detail with reference to the accompanying drawings. However, embodiments of the present disclosure may be implemented in various different forms and are not limited to one or any specific embodiment of the present disclosure described herein.

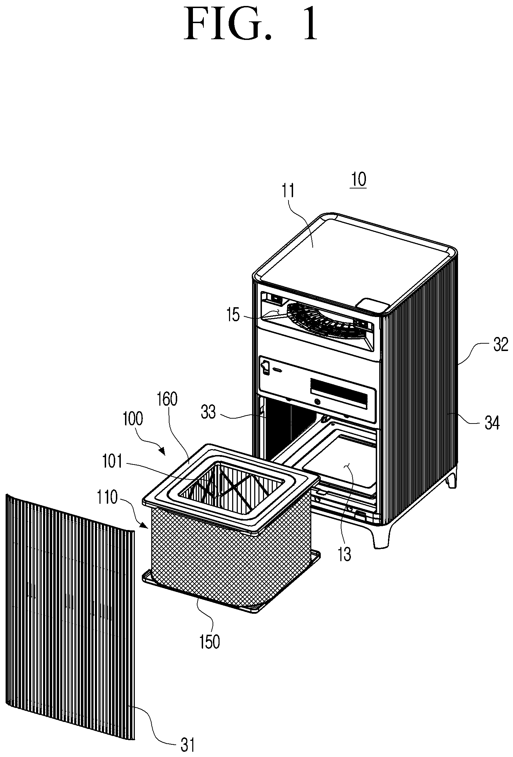

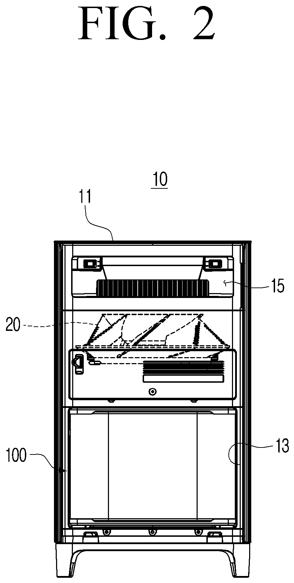

FIG. 1 is an exploded perspective view illustrating an example in which a filter assembly 100 is mounted on an air cleaner 10 according to various embodiments. FIG. 2 is a diagram illustrating a front view of an air cleaner according to various embodiments. The air cleaner 10 illustrated in FIG. 2 is illustrated with a first cover 31 removed for convenience of description.

Referring to FIG. 1, the air cleaner 10 may include a main body 11, a blower fan 20 disposed inside the main body 11, the first cover 31, a second cover 32, a third cover 33, and a fourth cover 34 that are detachably mounted on front, rear, left, and right side surfaces of the main body 11, respectively, and the filter assembly 100 that purifies contaminated air introduced into the inside of the main body 11 from the outside of the main body 11.

The main body 11 may include a receiving space 13 into which the filter assembly 100 is retractably inserted. A size of the receiving space 13 may correspond to a size of the filter assembly 100 or may have a size slightly larger than the size of the filter assembly 100 so that the insertion and withdrawal of the filter assembly 100 may be facilitated. The receiving space 13 may be opened to the front, rear, left, and right side surfaces of the main body 11, respectively, so that external air may move from the front, rear, left, and right side surfaces of the main body 11 into the receiving space 13, respectively.

The main body 11 may include a discharge space 15 for discharging air purified by the filter assembly 100 to the outside of the main body 11. The discharge space 15 may be opened to the front, rear, left, and right side surfaces of the main body 11, respectively, so that the air purified by the filter assembly 100 may move to the outside of the main body 11 through the front, rear, left, and right side surfaces of the main body 11.

The discharge space 15 may be disposed at a higher position than the receiving space 13. For example, the receiving space 13 may be disposed under the main body 11, and the discharge space 15 may be disposed above the main body 11.

Referring to FIG. 2, the blower fan 20 may be disposed inside the main body 11. For example, the blower fan 20 may be disposed between the receiving space 13 and the discharge space 15. The blower fan 20 may provide a suction force that sucks (or causes to be taken in) external air of the main body 11 into the receiving space 13. The blower fan 20 may provide a discharge force that makes air taken into the receiving space 13 flow into the discharge space 15.

The first, second, third, and fourth covers 31, 32, 33, and 34 may be detachably mounted on the front, rear, left, and right side surfaces of the main body 11. The first cover 31 may be detachably connected to the front side surface of the main body 11 for replacement of the filter assembly 100, and the second, third, and fourth covers 32, 33, and 34 may be fixedly connected to the main body 11. The first, second, third, and fourth covers 31, 32, 33, and 34 may each be formed in a grill shape having a plurality of slits through which air may pass.

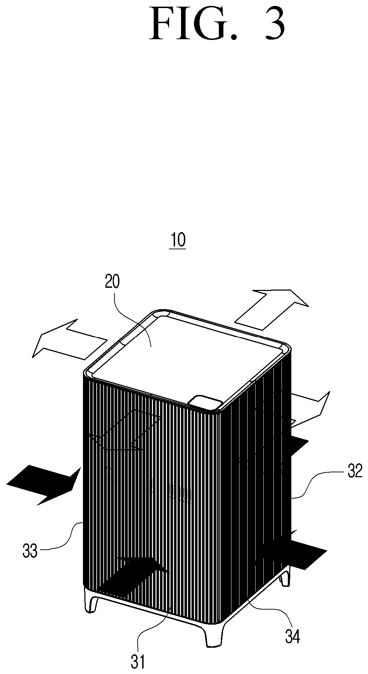

Referring to FIG. 3, when the blower fan 20 is driven, the external air may be introduced into the receiving space 13 through the first, second, third, and fourth covers 31, 32, 33, and 34. Among the contaminant (e.g. dust) contained in the external air, dust having a size larger than the plurality of slits of the first, second, third, and fourth covers 31, 32, 33, and 34 may be filtered by the first, second, third, and fourth covers 31, 32, 33, and 34 and removed from the external air. The purified air may flow from the receiving space 13 to the discharge space 15 by the blower fan 20. The purified air flowing into the discharge space 15 may be discharged to the front, rear, left, and right side surfaces of the main body 11 through the first, second, third, and fourth covers 31, 32, 33, and 34, respectively.

Referring to FIG. 3, when the blower fan 20 is driven, the pressure of the receiving space 13 may be lower than the atmospheric pressure. The external air existing around the main body 11 may be sucked into the receiving space 13 through the front, rear, left, and right side surfaces of the main body 11, respectively. The dust contained in the external air may be removed as the external air passes through the filter assembly 100. The purified air may flow from the receiving space 13 to the discharge space 15 by the blower fan 20. The purified air flowing into the discharge space 15 may be discharged to the front, rear, left, and right side surfaces of the main body 11, respectively.

The filter assembly 100 is inserted into the receiving space 13 and may purify the external air introduced into the receiving space 13 from the outside of the main body 11. The filter assembly 100 may remove contaminants (e.g., fine dust, odorous substances) contained in the external air.

The filter assembly 100 may be formed in a tubular shape in which a guide passage 101 (see FIG. 1) is provided on the inside. By driving the blower fan 20, the external air sucked into the receiving space 13 through the first, second, third, and fourth covers 31, 32, 33, and 34 may be introduced into the guide passage 101 from the outside of the filter assembly 100. The contaminants contained in the external air may be filtered by the filter assembly 100. The purified air may flow into the blower fan 20 along the guide passage 101 of the filter assembly 100 and then be discharged to the front, rear, left, and right side surfaces of the main body 11 through the discharge space 15, respectively.

The filter assembly 100 may be formed in a rectangular cylinder shape including the front, rear, left side, and right side surfaces corresponding to the first, second, third, and fourth covers 31, 32, 33, and 34, respectively. A shape of the filter assembly 100 is not limited to a rectangular cylinder. For example, when the main body 11 has a cylindrical shape, the filter assembly may be formed in a cylindrical shape. In this way, the filter assembly 100 may have a shape corresponding to the shape of the main body 11.

The air cleaner 10 according to an embodiment of the present disclosure may further include an electric dust collecting filter on the inside of the main body 11. The electric dust collecting filter may be disposed downstream of the filter assembly 100 in a flow direction of air. For example, the electric dust collecting filter may be disposed between the filter assembly 100 and the blower fan 20. The electric dust collecting filter may be configured to collect dust using, for example, electrostatic force. The electric dust collecting filter may form an electric field. The dust contained in the external air may be collected in the electric dust collecting filter by the electric field formed by the electric dust collecting filter. Organic matters such as bacteria and viruses contained in the external air may be removed by the electric field formed by the electric dust collecting filter.

After a certain period of use, a user may take out the filter assembly 100 whose lifespan has expired from the receiving space 13, separate a filter unit 110 that filters dust from a first case 150 and a second case 160, and then throw the filter unit 110 away in a trash can. Since the filter unit 110 is configured to have flexibility, the shape of the filter unit 110 may be easily changed. When a side surface of the filter unit 110 is compressed, the guide passage 101 narrows and a volume of the filter unit 110 is reduced. For example, the filter unit 110 may be compressed from a three-dimensional cylinder shape to a roughly flat shape. Therefore, the filter unit 110 may be discharged in a reduced volume.

Hereinafter, an example configuration of the filter assembly 100 according to various embodiments will be described in greater detail with reference to the drawings.

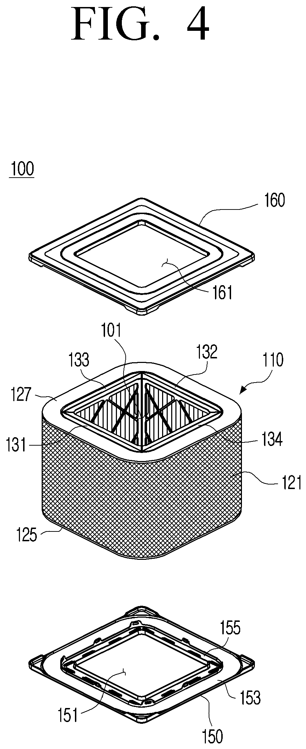

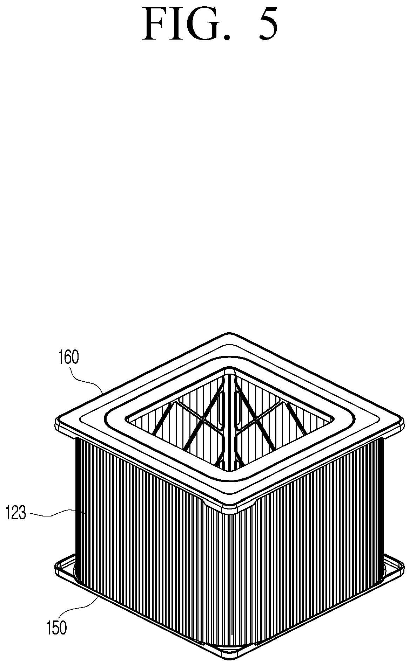

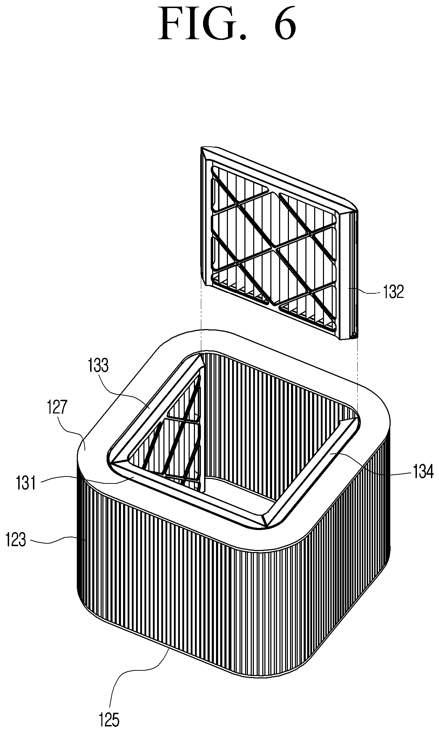

FIG. 4 is an exploded perspective view illustrating the filter assembly 100 according to various embodiments. FIG. 5 is a perspective view illustrating the filter assembly 100 according to various embodiments, and illustrates the filter assembly 100 with a pre-filter 121 surrounding a dust collecting filter 123 being removed. FIG. 6 is an exploded perspective view illustrating an example in which the post-filter is combined with the dust collection filter of the filter assembly according to various embodiments.

Referring to FIG. 4, the filter assembly 100 may include the filter unit 110, and the first case 150 and the second case 160 that are each detachably coupled to the filter unit 110.

The filter unit 110 may be formed in a loop shape so that the guide passage 101 may be formed on the inside. The filter unit 110 may be configured to have flexibility so that it may be unfolded or folded when discarded after being separated from the first case 150 and the second case 160. The filter unit 110 may be configured to maintain an approximately square cylinder shape. The shape of the filter unit 110 is not limited to a square cylinder, and may be configured to maintain an n-polygon cylinder shape (where n is a natural number greater than or equal to 3) or a cylindrical shape. For example, the first case 150 may include an opening

(151) formed to form a loop shape corresponding to the filter unit 110. The second case 160 may include an opening 161 formed to form a loop shape corresponding to the filter unit 110.

Referring to FIGS. 4 and 5, the filter unit 110 may include the dust collection filter 123, a first molding 125 provided under the dust collection filter 123, a second molding 127 provided above the dust collection filter 123, first, second, third, and fourth post-filters 131, 132, 133, and 134 disposed along an inner side surface of the dust collection filter 123, and the pre-filter 121 surrounding an outer side surface of the dust collection filter 123.

The external air passing from the outside of the filter unit 110 to the inside (e.g., guide passage 101) of the filter unit 110 may sequentially pass through the pre-filter 121, the dust collecting filter 123, and the first, second, third, and fourth post-filters 131, 132, 133, and 134, thereby removing dust and odor particles contained in the external air.

The pre-filter 121 may be formed as a thin-film mesh. The pre-filter 121 may use a thin-film mesh filter (e.g., a microfiber filter). The pre-filter 121 may be coupled to or separated from the dust collecting filter 123 by male/female Velcro tapes provided at each end. The pre-filter 121 may capture fine dust contained in the external air. The pre-filter 121 may be disposed upstream of the dust collecting filter 123 based on the air flow direction.

The dust collecting filter 123 may use a high efficiency particulate air (HEPA) filter, but is not limited thereto, and may use various types of filters. The dust collecting filter 123 may capture ultrafine dust contained in air that has been primarily filtered by the pre-filter 121.

The dust collecting filter 123 may include the first molding 125 that may minimize or improve air leakage between a lower end of the dust collecting filter 123 and the first case 150. The dust collecting filter 123 may include the second molding 127 that may minimize or improve air leakage between an upper end of the dust collecting filter 123 and the first case 160.

The first molding 125 may be provided in a loop shape along the lower end of the dust collecting filter 123. The first molding 125 may cover a bottom surface of the dust collecting filter 123, a lower end of the outer side surface of the dust collecting filter 123, and a lower end of an inner side surface of the dust collecting filter 123, respectively. The first molding 125 may be made of a flexible material. When the dust collecting filter 123 is coupled with the first case 150, the first molding 125 may be in close contact with the first case 150. The first molding 125 may minimize or improve air leakage between the lower end of the dust collecting filter 123 and the first case 150.

The second molding 127 may be provided in a loop shape along the upper end of the dust collecting filter 123. The second molding 127 may cover an upper surface of the dust collecting filter 123, an upper end of the outer side surface of the dust collecting filter 123, and an upper end of the inner side surface of the dust collecting filter 123, respectively. The second molding 127 may be made of the same material as the first molding 125. When the dust collecting filter 123 is coupled with the second case 160, the second molding 127 may be in close contact with the second case 160. The second molding 127 may minimize or improve air leakage between the upper end of the dust collecting filter 123 and the second case 160.

Referring to Table 1 below, a filter fabric applied to the dust collecting filter 123 has a dust collecting efficiency of 99.98%. In this case, the particle size of the filter fabric is 0.3 µm. The dust collection efficiency of the filter assembly 100 having the dust collection filter 123 to which the filter fabric is applied is 99.97% when the first molding 125 and the second molding 127 are applied, and the leakage rate is 0.01% compared to the dust collection efficiency of the filter fabric. On the other hand, the dust collection efficiency of the filter assembly 100 to which the first molding 125 and the second molding 127 are not applied is 97.86%, and the leakage rate is 2.12% compared to the dust collection efficiency of the filter fabric. Therefore, the filter assembly 100 may have high dust collection efficiency due to the first molding 125 and the second molding 127.

**[Table 1]**

| Division | | Urethane Molding | |
|---|---|---|---|
| | | Presence | Absence |
| Dust collecting efficiency [%, @0.3µm] | Filter fabric | 99.98% | 99.98% |
| | filter assembly | 99.97% | 97.86% |
| Leakage rate | | 0.01% | 2.21% |

The filter assembly 100 may improve the dust collection efficiency of the filter by minimizing/reducing the air leakage as the first molding 125 and the second molding 127 of the dust collection filter 123 are closely attached to the first case 150 and the second case 160. The dust collection filter 123 may be easily separated from the first case 150 and the second case 160 by the first molding 125 and the second molding 127.

The first molding 125 and the second molding 127 may be made of a material (e.g., urethane resin) having flexibility and predetermined strength. The dust collection filter 123 may maintain a three-dimensional shape by the strength of the first molding 125 and the second molding 127 when not coupled to the first case 150 and the second case 160. When the force for compressing the dust collecting filter 123 exceeds the strength of the first molding 125 and the second molding 127, the first molding 125 and the second molding 127 may be easily deformed. The used dust collecting filter 123 may be discarded in a state in which its volume is reduced as it is easily compressed.

Referring to FIG. 6, the first, second, third, and fourth post-filters 131, 132, 133, and 134 may include activated carbon. The first, second, third, and fourth post-filters 131, 132, 133, and 134 may be disposed downstream of the dust collecting filter 123 based on the direction of air flow. The first, second, third, and fourth post-filters 131, 132, 133, and 134 may adsorb and filter out odor particles or gas particles contained in the air secondarily filtered by the dust collecting filter 123.

The first, second, third, and fourth post-filters 131, 132, 133, and 134 may be configured to have the same size, respectively. The first, second, third, and fourth post-filters 131, 132, 133, and 134 may be disposed to correspond to four surfaces of inner sides of the dust collecting filter 123, respectively.

The lower and upper ends of the first, second, third, and fourth post-filters 131, 132, 133, and 134 may be configured to be detachably connected to the first case 150 and the second case 160, respectively. The fastening structure between the first, second, third and fourth post-filters 131, 132, 133, and 134 and the first case 150 and the second case 160 is described below.

The filter unit 110 according to various embodiments includes the plurality of first, second, third and fourth post-filters 131, 132, 133, and 134, but is not limited thereto. For example, the post-filter may be formed in a single square cylinder shape. In addition, the post-filter may be formed in a cylindrical shape corresponding to the shape of the dust collection filter 123 when the dust collection filter 123 is formed in a cylindrical shape.

The filter unit 110 according to various embodiments may be configured not to include the pre-filter 121 and include the dust collection filter 123 and the first, second, third and fourth post-filters 131, 132, 133, and 134.

Hereinafter, a method of forming the first molding 125 at the lower end of the dust collecting filter 123 will be described in greater detail with reference to the drawings.

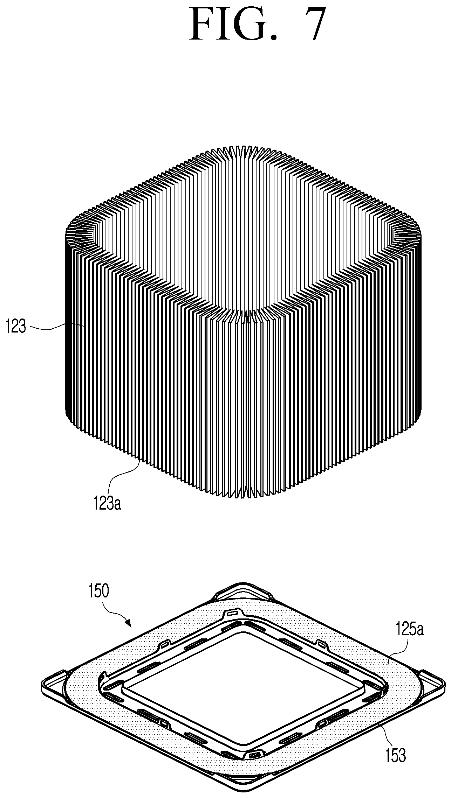

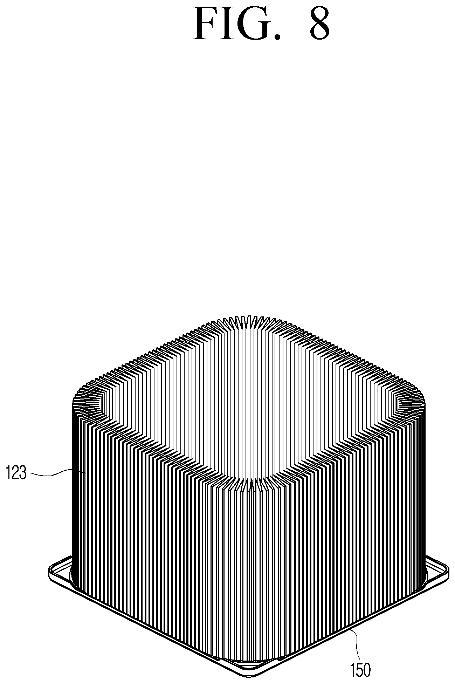

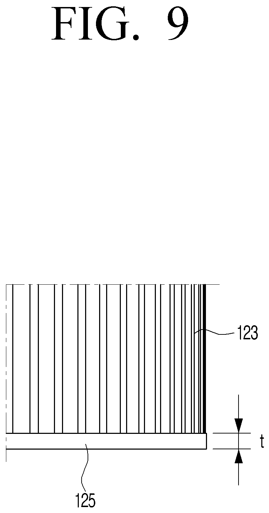

FIG. 7 is a an exploded perspective view illustrating an example of applying a two-component urethane adhesive to a first case of the filter assembly according to various embodiments. FIG. 8 is a perspective view illustrating an example of temporarily bonding the dust collection filter to the first case of the filter assembly according to various embodiments. FIG. 9 is a diagram illustrating an enlarged view of a part of the dust collection filter according to various embodiments.

Referring to FIG. 7, a urethane adhesive (e.g., a two-component urethane adhesive) 125a is applied to a first coupling groove 153 of the first case 150 into which the lower end of the dust collecting filter 123 is inserted. The two-component urethane adhesive 125a may include a main agent and a curing agent, and the main agent and the curing agent may be cured by a chemical reaction with each other. The two-component urethane adhesive 125a is maintained in a liquid state before being cured.

A lower end 123a of the dust collecting filter 123 is pushed into the first coupling groove 153 of the first case 150 to which the two-component urethane adhesive 125a is applied. The dust collecting filter 123 may be configured to have an approximately square cylinder shape by folding the filter paper in a zigzag manner. The two-component urethane adhesive 125a may be introduced into the inside of the lower end 123a of the dust collecting filter 123 to a predetermined height when the lower end 123a of the dust collecting filter 123 is inserted into the first coupling groove 153 of the first case 150.

Referring to FIG. 8, the dust collecting filter 123 is left in a state where the lower end of the dust collecting filter 123 is inserted into the first coupling groove 153 of the first case 150 while the two-component urethane adhesive 125a is cured. The lower end 123a of the dust collecting filter 123 may be bonded to the first case 150 by the two-component urethane adhesive 125a.

The two-component urethane adhesive 125a may become the first molding 125 coupled to the lower end of the dust collecting filter 123 after being cured. The cured first molding 125 may be firmly attached to the lower end of the dust collecting filter 123. The first molding 125 may have flexibility that is not too hard and may be easily bent or stretched.

Referring to FIG. 9, the first molding 125 may be maintained in a shape corresponding to the first coupling groove 153 of the first case 150. The first molding 125 may have a predetermined thickness t.

After forming the first molding 125 at the lower end of the dust collecting filter 123, the second molding 127 may be formed at the upper end of the dust collecting filter 123 by a method substantially the same as the method of forming the first molding 125. In the process of forming the first molding 125 and the second molding 127 at the lower end and upper end of the dust collecting filter 123, respectively, the dust collecting filter 123 may be temporarily bonded to the first case 150 and the second case 160.

The first case 150 and the second case 160 may be made of a material that may be easily separated from the first molding 125 and the second molding 127 of the dust collecting filter 123. When the first molding 125 and the second molding 127 are made of a urethane resin, the first case 150 and the second case 160 may be made of a material that does not form an ionic bond or a covalent bond with the first molding 125 and the second molding 127. For example, the first case 150 and the second case 160 may be made of a nonpolar polymer resin having a surface energy of about 33 dynes/cm or less. For example, the polymer resin may be polyolefin. The polyolefin-based polymer resin may include polypropylene and polyethylene. The polypropylene and polyethylene have chemical stability, durability, and light weight, and are easy to process and inexpensive. The surface energy of polypropylene is about 29 to 31 dynes/cm. The surface energy of polypropylene is about 30 to 31 dynes/cm.

The first case 150 and the second case 160 may be configured by mixing polypropylene and a strength-reinforcing material to reinforce strength. The strength-reinforcing material may include at least one of talc, glass fiber, and carbon black. For example, the first case 150 and the second case 160 may each be made of a mixture of 80% of polypropylene and 20% of talc. In addition, the first case 150 and the second case 160 may each be made of a mixture of 80% of polypropylene, 10% of talc, and 10% of glass fiber.

Since the first case 150 and the second case 160 are made of a material having low surface energy, they may be easily separated from the first molding 125 and the second molding 127 while being temporarily bonded thereto.

In the disclosure, the first case 150 and the second case 160 are described as examples of being used as jigs for forming the first molding 125 and the second molding 127, but are not limited thereto. For example, the first molding 125 provided at the lower end of the dust collecting filter 123 may be formed by a separate jig having a groove formed on one surface having substantially the same shape as the first coupling groove 153 of the first case 150. In this case, the jig may be made of a material having low surface energy (e.g., about 33 dynes/cm or less) so that the first molding 125 may be easily separated from a groove of the jig after being cured.

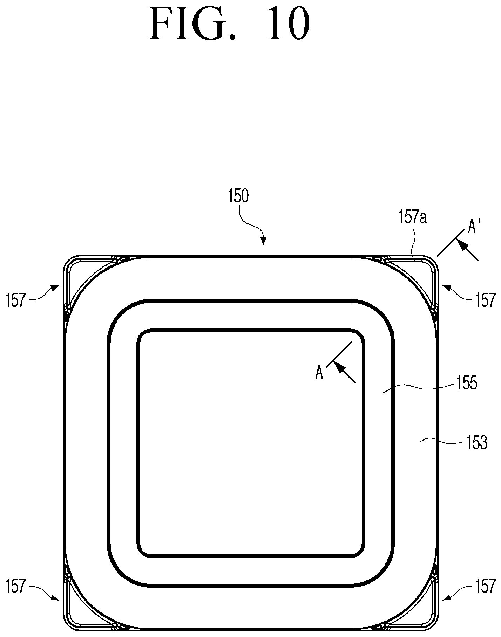

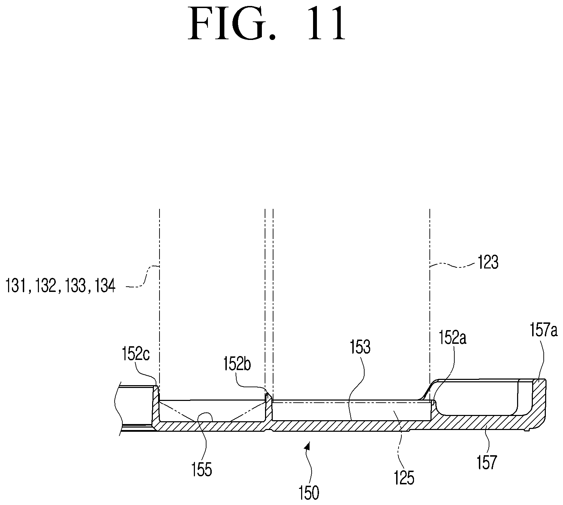

FIG. 10 is a diagram illustrating a plan view of the first case of the filter assembly according to various embodiments. FIG. 11 is a cross-sectional view taken along line A-A' of FIG. 10 according to various embodiments.

Referring to FIG. 10, the first case 150 may include the first coupling groove 153 to which the lower end of the filter unit 110 is coupled, and a second coupling groove 155 to which the lower ends of the first, second, third, and fourth post-filters 131, 132, 133, and 134 are coupled.

The first coupling groove 153 of the first case 150 may be formed in a loop shape along an upper surface of the first case 150. The first coupling groove 153 of the first case 150 may be formed by a first rib 152a and a second rib 152b protruding to a predetermined height on the upper surface of the first case 150. The heights of the first rib 152a and the second rib 152b may be approximately greater than the thickness t of the first molding 125 (see FIG. 9).

The first coupling groove 153 of the first case 150 may be configured to correspond to the lower end of the dust collecting filter 123. For example, when the dust collecting filter 123 has a square cylinder shape, the first coupling groove 153 of the first case 150 may be formed in an approximately square shape.

Referring to FIG. 11, the lower end of the dust collecting filter 123 may be inserted into the first coupling groove 153 of the first case 150. The first molding 125 provided at the lower end of the dust collecting filter 123 may be closely attached to the first coupling groove 153 of the first case 150. Accordingly, the air leakage between the upper end of the dust collecting filter 123 and the second case 160 may be minimized or improved.

In order to increase the detachability between the first molding 125 and the first coupling groove 153 of the first case 150, the first coupling groove 153 of the first case 150 may be configured to have a low surface roughness. For example, the first case 150 may be manufactured by injection molding. In this case, a plurality of unevennesses may be formed on the surface of the first coupling groove 153 of the first case 150 depending on the quality of the mold. The plurality of unevennesses may strengthen the adhesion between the first molding 125 of the dust collecting filter 123 and the first coupling groove 153 of the first case 150, thereby reducing the detachability. Therefore, the first coupling groove 153 of the first case 150 may be smoothed on the surface by lapping processing (e.g., #3000 lapping processing).

The first case 150 may be subjected to the lapping processing only in the first coupling groove 153 with which the first molding 125 is in close contact, but is not limited thereto. For example, in the case where a number of unevennesses are formed in the entire first case 150 due to the low quality of the mold for injecting the first case 150, the lapping processing may be performed on the entire first case 150.

The second coupling groove 155 of the first case 150 may be provided in a loop shape on the upper surface of the first case 150 along the first coupling groove 153 of the first case 150. The second coupling groove 155 of the first case 150 may be positioned closer to the center portion of the first case 150 than the first coupling groove 153. The second coupling groove 155 of the first case 150 may be formed by the second rib 152b and the third rib 152c. The second rib 152b may be a configuration commonly used to form the first coupling groove 153 and the second coupling groove 155. The lower ends of the first, second, third, and fourth post-filters 131, 132, 133, and 134 may be inserted into the second coupling groove 155 of the first case 150, respectively.

Referring to FIG. 10, the first case 150 may have handles 157 provided at each of the four corners. Each of the plurality of handles 157 may be provided with a gripping jaw 157a for end portion of fingers to be caught.

A user may easily separate the first case 150 from the lower ends of the first, second, third, and fourth post-filters 131, 132, 133, and 134 by pulling one of the plurality of handles 157 in a direction away from the lower ends of the first, second, third, and fourth post-filters 131, 132, 133, and 134.

The second case 160 may include substantially the same structure as the first case 150. For example, the second case 160 may have a third coupling groove into which the upper end of the dust collection filter 123 is inserted and which is in close contact with the second molding 127. The third coupling groove of the second case 160 may be smoothed by the lapping processing to improve detachability from the second molding 127. The second case 160 may have a fourth coupling groove into which the upper ends of the first, second, third and fourth post-filters 131, 132, 133, and 134 are inserted, respectively.

When the first case 150 and the second case 160 are coupled to the dust collection filter 123, the first coupling groove 153 of the first case 150 and the third coupling groove of the second case 160 may be disposed to face each other. The second coupling groove 155 of the first case 150 and the fourth coupling groove of the second case 160 may be disposed to face each other.

The second case 160 may have handles provided at each of the four corners. The second case 160 may be separated from the upper ends of the first, second, third, and fourth post-filters 131, 132, 133, and 134 by pulling the plurality of handles in a direction away from the upper ends of the first, second, third, and fourth post-filters 131, 132, 133, and 134.

Hereinafter, referring to the drawings, the structure of the filter assembly 100 for fastening between the first, second, third, and fourth post-filters 131, 132, 133, and 134 of the filter unit 110 and the first and second cases 150 and 160 will be described in greater detail.

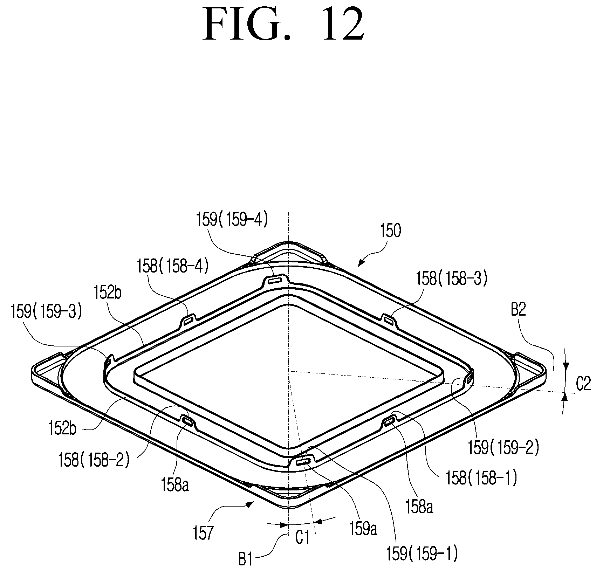

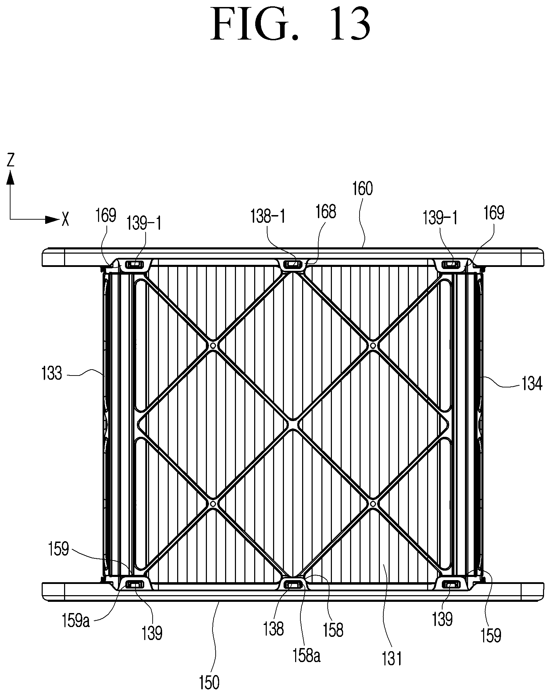

FIG. 12 is a perspective view illustrating the first case of the filter assembly according to various embodiments. FIG. 13 is a diagram illustrating a side view of an example in which a plurality of post-filters are combined with the first case and the second case of the filter assembly according to various embodiments.

Referring to FIGS. 12 and 13, the fastening structure of the filter assembly 100 may include a plurality of first catches 158 and a plurality of second catches 159 provided in the first case 150, and a plurality of first hooks 138 and a plurality of second hooks 139 provided at the lower ends of the first, second, third, and fourth post-filters 131, 132, 133, and 134, respectively. The plurality of first hooks 138 may be detachably fastened to fastening holes 158a of the plurality of first catches 158 of the first case 150. The plurality of second hooks 139 may be detachably fastened to fastening holes 159a of the plurality of second catches 159 of the first case 150.

In addition, the fastening structure of the filter assembly 100 may include a plurality of third catches 168 and a plurality of fourth catches 169 provided in the second case 160, and a plurality of third hooks 138-1 and a plurality of fourth hooks 139-1 provided on the upper ends of the first, second, third, and fourth post-filters 131, 132, 133, and 134, respectively. The plurality of third hooks 138-1 may be detachably fastened to the plurality of third catches 168 of the second case 160. The plurality of fourth hooks 139-1 may be detachably fastened to the plurality of fourth catches 169 of the second case 160.

The fastening structure between the second case 160 and the first, second, third and fourth post-filters 131, 132, 133, and 134 is substantially the same as the fastening structure between the first case 150 and the first, second, third and fourth post-filters 131, 132, 133, and 134. Therefore, the fastening structure between the first case 150 and the first, second, third and fourth post-filters 131, 132, 133, and 134 will be described in greater detail below.

The plurality of first catches 158 of the first case 150 may extend to an edge of the second rib 152b in the same direction as a protruding direction of the second rib 152b at a predetermined interval. For example, the plurality of first catches 158 may be positioned to correspond to the centers of the front, rear, left, and right side surfaces of the first case 150. In this case, the number of the plurality of first catches 158 of the first case 150 may be four.

The plurality of first catches 158 of the first case 150 may correspond to the plurality of first hooks 138 each provided at the lower ends of the first, second, third, and fourth post-filters 131, 132, 133, and 134, respectively. The plurality of first catches 158 of the first case 150 may include the fastening hole 158a to which the plurality of first hooks 138 of the first, second, third, and fourth post-filters 131, 132, 133, and 134 are fastened, respectively.

The plurality of second catches 159 of the first case 150 may extend to the edge of the second rib 152b in the same direction as the protruding direction of the second rib 152b. The plurality of second catches 159 of the first case 150 may be disposed at positions adjacent to four corners of the first case 150, respectively.

For example, as illustrated in FIG. 12, one second catch 159-1 of the plurality of second catches 159 of the first case 150 may be disposed at a position that is biased at a first angle C1 with respect to a virtual first straight line B1 that crosses opposing corners of the first case 150. Another second catch 159-2 of the plurality of second catches 159 may be disposed at a position that is biased at a second angle C2 with respect to a virtual second straight line B2 that is orthogonal to the virtual first straight line B1 and crosses the opposing corners of the first case 150. The first angle C1 and the second angle C2 may be substantially the same.

The two second catches 159-1 and 159-2 disposed on both sides of the first catch 158-1 may be disposed closer to the first catch 158-1 than the other adjacent first catches 158-2 and 158-3, respectively. The remaining two second catches 159-3 and 159-4 may be disposed symmetrically to the two second catches 159-1 and 159-2.

As illustrated in FIG. 13, the first case 150 and the second case 160 may be each fastened to the lower and upper ends of the first, second, third, and fourth post-filters 131, 132, 133, and 134 so that the plurality of second catches 159 of the first case 150 and the plurality of fourth catches 169 of the second case 160 are symmetrical to each other. In this case, the plurality of first and second catches 158 and 159 of the first case 150 are fastened to the plurality of first and second hooks 138 and 139 provided at the lower portions of the first, second, third, and fourth post-filters 131, 132, 133, and 134. In addition, the plurality of third and fourth catches 168 and 169 of the second case 160 are fastened to the plurality of third and fourth hooks 138-1 and 139-1 provided at the upper portions of the first, second, third, and fourth post-filters 131, 132, 133, and 134.

In this way, by the fastening structure in which the plurality of first and second catches 158 and 159 of the first case 150 and the plurality of third and fourth catches 168 and 169 of the second case 160 are configured symmetrically to each other, the fastening between the first, second, third, and fourth post-filters 131, 132, 133, and 134 and the first and second cases 150 and 160 is not easily separated even if the upper and lower portions of the first, second, third, and fourth post-filters 131, 132, 133, and 134 are twisted in opposite directions around a Z-axis. Accordingly, the first, second, third, and fourth post-filters 131, 132, 133, and 134 and the first and second cases 150 and 160 may be firmly connected to each other. The dust collecting filter 123 having flexibility may stably maintain a square cylinder shape by the fastening structure.

Hereinafter, an example of separating the first case 150 from the lower ends of the first, second, third, and fourth post-filters 131, 132, 133, and 134 will be described in greater detail with reference to the drawings.

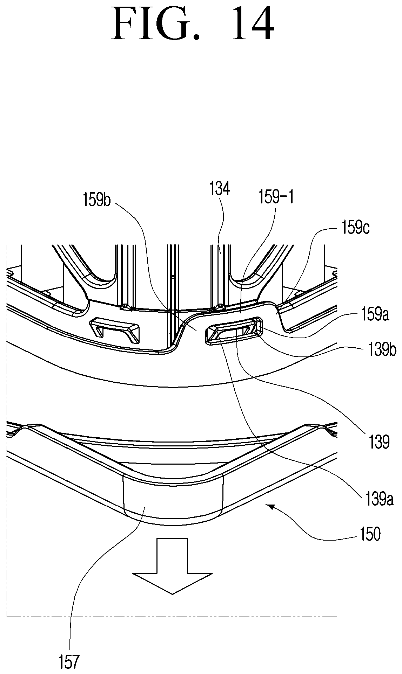

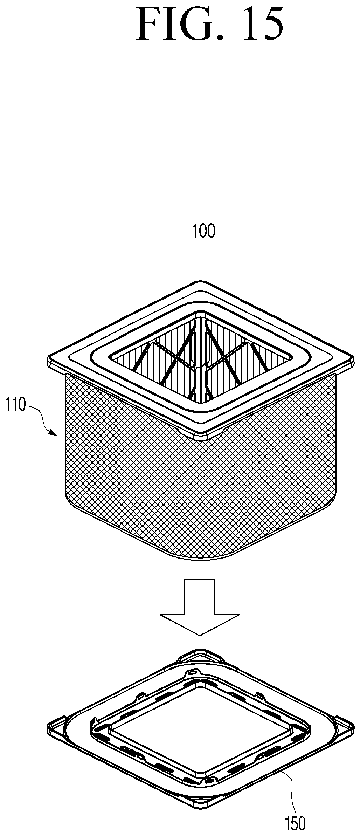

FIG. 14 is an enlarged partial perspective view illustrating a structure in which the fourth post-filter and the first case of the filter assembly are mutually fastened according to various embodiments. FIG. 15 is an exploded perspective view illustrating an example in which the first case is separated from the filter unit of the filter assembly according to various embodiments.

Referring to FIG. 14, the handle 157 of the first case 150 is pulled in a direction away from the lower ends of the first, second, third, and fourth post-filters 131, 132, 133, and 134. The second catch 159 adjacent to the handle 157 of the first case 150 may be pulled in the direction in which the handle 157 is pulled.

In this case, a left portion 159b of the second catch 159 adjacent to the corner of the first case 150 is moved in the direction in which the handle 157 is pulled before a right portion 159c of the second catch 159. After the left portion 139a of the second hook 139 of the fourth post-filter 134 adjacent to the corner of the first case 150 is separated from the fastening hole 159a of the second catch 159 before the right portion 139b of the second hook 139, the right portion 139b of the second hook 139 may be separated from the fastening hole 159a of the second catch 159.

In this way, the second catch 159 of the first case 150 and the second hook 139 of the fourth post-filter 134 fastened thereto are disposed to be biased to one side from the center (e.g., the virtual first straight line B1) of the corner of the first case 150, so the second catch 159 of the first case 150 and the second hook 139 of the fourth post-filter 134 may be easily separated.

In this way, when the remaining handles 157 of the first case 150 are each pulled in the direction away from the first, second, and third post-filters 131, 132, and 133, as illustrated in FIG. 15, the first case 150 may be easily separated from the filter unit 110 without effort. The second case 160 may be easily separated from the upper end of the filter unit 110 in the same way as the method of separating the first case 150 from the lower end of the filter unit 110.

The used filter assembly 100 discharges the filter unit 110 separately from the first case 150 and the second case 160.

While the present disclosure has been illustrated and described above with reference to various embodiments, it will be understood by those skilled in the art that various changes in form and detail may be made without departing from the spirit and scope of the present disclosure including the appended claims and their equivalents. It will also be understood that any of the embodiment(s) described herein may be used in conjunction with any other embodiment(s) described herein.

## Claims

1. A filter assembly, comprising:
a filter unit including a filter;
a first case coupled to a lower end of the filter unit; and
a second case coupled to the upper end of the filter unit,
wherein the filter unit includes:
a first molding provided at the lower end of the filter unit and in contact with the first case; and
a second molding provided at an upper end of the filter unit and in contact with the second case; and
each of the first case and the second case comprising a non-polar polymer material.

2. The filter assembly as claimed in claim 1, wherein each of the first molding and the second molding comprises a urethane resin.

3. The filter assembly as claimed in claim 2, wherein the urethane resin comprises a curable two-component urethane adhesive.

4. The filter assembly as claimed in claim 1, wherein the non-polar polymer material has a surface energy of 33 dynes/cm or less.

5. The filter assembly as claimed in claim 1, wherein a surface of the first case, in contact with the first molding, is formed by lapping processing, and
a surface of the second case, in contact with the second molding, is formed by the lapping processing.

6. The filter assembly as claimed in claim 4, wherein each of the first case and the second case comprises polypropylene or polyethylene.

7. The filter assembly as claimed in claim 4, wherein each of the first case and the second case includes a strength-reinforcing material included in the polypropylene or polyethylene, wherein
the strength-reinforcing material includes at least one of talc, glass fiber, and carbon black.

8. The filter assembly as claimed in claim 1, further comprising:
a fastening structure including a fastener configured to detachably fasten the lower end of the filter unit and the first case and to detachably fasten the upper end of the filter unit and the second case,
wherein the filter unit includes:
a first filter having a cylindrical shape wherein first molding is coupled along the lower end and the second molding is coupled along the upper end; and
a second filter provided on an inner side of the first filter, and
the fastening structure includes:
a plurality of first hooks provided along a lower end of the second filter;
a plurality of second hooks provided along an upper end of the second filter;
a plurality of first catches provided in the first case and having fastening holes to which the plurality of first hooks are configured to be fastened; and
a plurality of second catches provided in the second case and having fastening holes to which the plurality of second hooks are configured to be fastened.

9. The filter assembly as claimed in claim 8, wherein each of the first case and the second case has a rectangular loop shape,
at least one first catch among the plurality of first catches is disposed to be biased at a certain angle from a virtual first straight line crossing two opposing corners of the first case, and
at least one second catch among the plurality of second catches is disposed to be biased at a certain angle from a virtual second straight line crossing two opposing corners of the second case.

10. The filter assembly as claimed in claim 9, wherein the first catch biased from the virtual first straight line and the second catch biased from the virtual second straight line are each configured to be fastened to the second filter to face each other.

11. The filter assembly as claimed in claim 9, wherein a spacing between the plurality of first catches disposed on a first side surface of the first case and a spacing between the plurality of first catches disposed on a second side surface adjacent to the first side surface of the first case are different, and
a spacing between the plurality of second catches disposed on the first side surface of the first case and the spacing between the plurality of second catches disposed on the second side surface adjacent to the first side surface of the first case are different.

12. The filter assembly as claimed in claim 9, wherein the first case further includes a plurality of first handles provided at each corner of the first case,
the second case further includes a plurality of second handles provided at each corner of the second case, and
the second filter includes a plurality of post-filters continuously disposed along an inner side surface of the first filter.

13. The filter assembly as claimed in claim 9, wherein the first case includes:
a first coupling groove having a loop shape and into which the first molding is configured to be inserted; and
a second coupling groove formed along one side of the first coupling groove and into which the lower end of the second filter is configured to be inserted, and
the second case includes:
a third coupling groove having a loop shape and into which the second molding is configured to be inserted; and
a fourth coupling groove formed along one side of the third coupling groove and into which the upper end of the second filter is configured to be inserted.

14. The filter assembly as claimed in claim 9, wherein the first filter is configured as a dust collection filter,
the second filter is configured as a deodorizing filter,
the filter unit further includes a third filter surrounding the first filter, and
the third filter is configured as a microfiber filter having a mesh shape.

15. An air cleaner, comprising:
a main body including a receiving space and a discharge space separated from the receiving space;
a blower fan disposed between the receiving space and the discharge space, configured to cause external air to be taken into the receiving space and to discharge the external air to an outside of the main body through the discharge space; and
a filter assembly including a filter retractably inserted into the receiving space of the main body and configured to purify the external air introduced into the receiving space,
wherein the filter assembly includes:
a filter unit including a first molding comprising urethane resin provided along a lower end and a second molding comprising urethane resin provided along an upper end, and has a cylindrical shape;
a first case configured to support the lower end of the filter unit while being in contact with the first molding;
a second case configured to support the upper end of the filter unit while being in contact with the second molding;
a fastening structure comprising a fastener configured to fasten the lower end of the filter unit and the first case and to fasten the upper end of the filter unit and the second case, and
each of the first case and the second case comprises a non-polar polymer material, and
the non-polar polymer material has a surface energy of 33 dynes/cm or less.
